# EUROPÄISCHE PATENTSCHRIFT

(11) **EP 1 111 439 B1**
(45) Veröffentlichungstag und Bekanntmachung des Hinweises auf die Patenterteilung: **21.11.2007**
(21) Anmeldenummer: 00127125.3
(22) Anmeldetag: 12.12.2000
(51) Int. Cl.: G02F 1/13357

(54) **Flüssigkristallzelle**
Liquid crystal cell
Cellule à cristal liquide

(30) Priorität: 23.12.1999 DE 19962824
(43) Veröffentlichungstag der Anmeldung: 27.06.2001
(73) Patentinhaber: Osram Opto Semiconductors GmbH, 93049 Regensburg (DE)
(72) Erfinder: Diekmann, Karsten, Dr., 64832 Babenhausen (DE); Reisinger, Achim, 65719 Hofheim (DE)
(74) Vertreter: Epping - Hermann - Fischer

(56) Entgegenhaltungen:
- WO-A-97/12276
- DE-A- 3 034 181
- JP-A- 11 316 376
- US-A- 3 950 078

## Beschreibung

Die Erfindung betrifft eine Flüssigkristallzelle mit einer durch Leuchtdioden (LED) gebildeten Hintergrundbeleuchtung, welche ein durch elektrische Anregung polarisiertes Licht aussendendes organisches LED-Material enthält.

Bei Flüssigkristallzellen besteht oftmals der Wunsch, zwischen einer Positiv- und Negativdarstellung wechseln zu können. Das ist bisher mit Segmentanzeigen noch nicht möglich und verlangt bei einer sogenannten Dot-Matrix eine aufwendige Ansteuerung.

Eine weitere Vorrichtung zum Wechsel zwischen einer Positiv- und einer Negativdarstellung ist in der US 3950078 A beschrieben. Dort wird der Darstellungswechsel durch Drehung eines Polarisationsfilters gegenüber einem Zweiten (Analysator) erreicht.

Eine Verwendung von polarisiertes Licht emittierenden organischen LED-Materialien zur Hinterleuchtung von Anzeigevorrichtungen ist in der WO 9712276 A beschrieben.

Der Erfindung liegt das Problem zugrunde, eine Flüssigkristallzelle der eingangs genannten Art so auszubilden, dass mit möglichst geringem Aufwand zwischen einer Positiv- und Negativdarstellung gewechselt werden kann.

Dieses Problem wird erfindungsgemäß dadurch gelöst, dass zumindest zwei ausgerichtete organische LED-Materialien, insbesondere Polymere, vorgesehen sind, die separat ansteuerbar sind und polarisiertes Licht mit sich kreuzenden Polarisationsrichtungen aussenden.

Bei einer solchen Flüssigkristallzelle kann man auf einen Polarisator verzichten. Als organisches LED-Material eignet sich besonders gut ein Polymer.

Der Wechsel zwischen Positiv- und Negativdarstellung ist ohne mechanisch zu verstellende Bauteile möglich, wenn die Hintergrundbeleuchtung durch zumindest zwei übereinander angeordnete LED-Materialien, insbesondere Polymere, mit sich kreuzenden Polarisationsrichtungen des emittierten Lichts gebildet ist.

Besonders einfach und wirkungsvoll ist die Flüssigkristallzelle mit Hintergrundbeleuchtung aufgebaut, wenn die Hintergrundbeleuchtung durch nebeneinander angeordnete, lichtemittierende Streifen der organischen LED-Materialien, insbesondere des Polymers gebildet sind, wobei die Polarisation der Streifen abwechselnd ausgerichtet ist und die jeweils benachbarten Streifen elektrisch separat ansteuerbar sind.

Die Erfindung lässt verschiedene Ausführungsformen zu. Zur weiteren Verdeutlichung ihres Grundprinzips sind drei davon in der Zeichnung stark schematisch dargestellt und werden nachfolgend beschrieben. Die Zeichnung zeigt in
- Fig. 1: eine Flüssigkristallzelle mit Hintergrundbeleuchtung,
- Fig. 2: eine Draufsicht auf die Flüssigkristallzelle,
- Fig. 3: einen Schnitt durch eine Hintergrundbeleuchtung nach der Erfindung,
- Fig. 4: eine Draufsicht auf eine Hintergrundbeleuchtung nach der Erfindung.

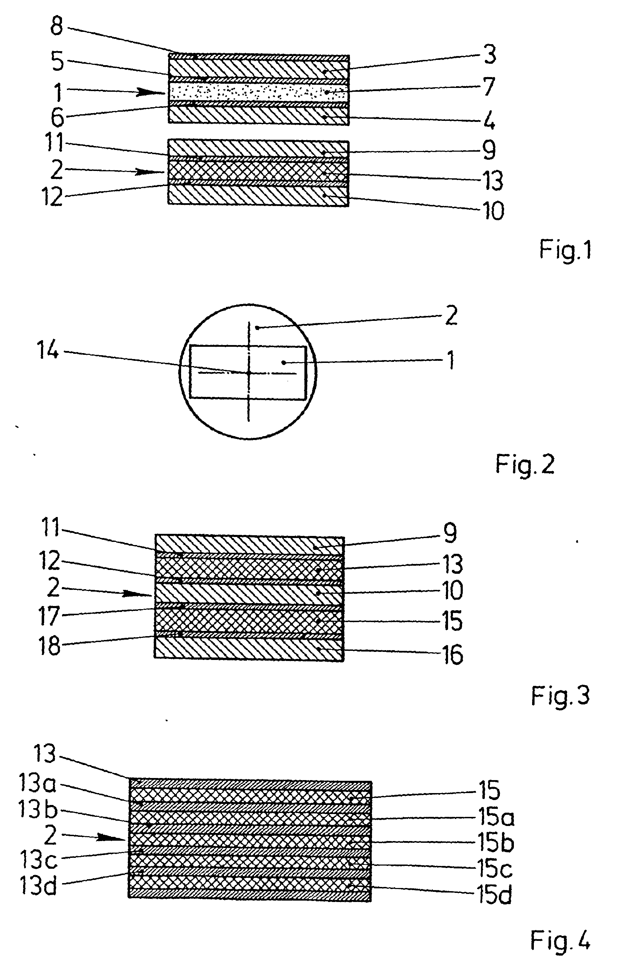

Die Figur 1 zeigte als vergleichendes Beispiel, welches nicht Bestandteil der Erfindung ist, eine Flüssigkristallzelle 1 mit einer durch eine einzige Leuchtdiode gebildeten Hintergrundbeleuchtung 2. Die Flüssigkristallzelle 1 hat zwei parallel zueinander mit Abstand ausgerichtete Glasplatten 3, 4, welche auf den einander zugewandten Seiten eine elektrisch leitende Beschichtung 5, 6 aus ITO aufweisen. Zwischen diesen Beschichtungen 5, 6 befindet sich ein Flüssigkristall 7. Die äußere Glasplatte 3 wird auf der dem Betrachter zugewandten Seite von einem Polarisator 8 abgedeckt.

Die als Leuchtdiode ausgebildete Hintergrundbeleuchtung 2 hat ebenfalls zwei Glasplatten 9, 10 mit einer elektrisch leitenden Beschichtung 11, 12 aus ITO oder Metrall. Zwischen diesen Beschichtungen 11, 12 ist ein polarisiertes Licht emittierendes Polymer 13 angeordnet.

Die Figur 2 zeigt, dass die Hintergrundbeleuchtung 2 kreisförmig ausgebildet ist und um eine zentrische Achse 14 verdreht werden kann. Dadurch lässt sich die Ausrich-tung des emittierten Lichtes relativ zu der Flüssigkristallzelle 1 verstellen.

Die Hintergrundbeleuchtung 2 gemäß Figur 3 hat zwei Schichten aus Polymer 13, 15, die durch die Glasplatten 9, 10 und eine Glasplatte 16, sowie durch elektrisch leitfähige Beschichtungen 17, 18 voneinander getrennt sind. Die beiden Polymere 13, 15 haben sich überkreuzende Polarisationsrichtungen und sind unabhängig voneinander ansteuerbar. Dadurch kann man mit der Hintergrundbeleuchtung nach Figur 3 die in Figur 1 gezeigte Flüssigkristallzelle 1 wahlweise mit Licht der einen oder anderen Polarisationsrichtung durchleuchten.

Die Figur 4 zeigt eine polarisiertes Licht emittierende Beschichtung, welche aus aneinandergrenzenden Streifen eines Polymers 13, 15; 13a, 15a; 13b, 15b; 13c, 15c; 13d, 15d gebildet ist. Die Polarisationsrichtung der Streifen ist unterschiedlich. Die einzelnen Streifen sind so dünn, dass sie bei Betrieb vom Auge nicht aufgelöst werden können. Weiterhin werden die unterschiedlich orientierten Streifen getrennt angesteuert, so dass die Flüssigkristallzelle wiederum wahlweise mit Licht unterschiedlicher Polarisationsrichtung durchleuchtet werden kann.

## Patentansprüche

1. Flüssigkristallzelle (1) mit einer durch eine Leuchtdiode gebildeten Hintergrundbeleuchtung (2), welche ein durch elektrische Anregung polarisiertes Licht aussendendes organisches LED-Material enthält, und einem Analysator (8),
**dadurch gekennzeichnet, dass**
das organische LED-Material zumindest zwei ausgerichtete organische LED-Materialien, insbesondere Polymere (13,15), aufweist, die separat ansteuerbar sind und polarisiertes Licht mit sich kreuzenden Polarisationsrichtungen aussenden.

2. Flüssigkristallzelle nach Anspruch 1,
**dadurch gekennzeichnet, dass**
die Hintergrundbeleuchtung (2) durch zumindest zwei übereinander angeordnete Polymere (13, 15) mit sich kreuzenden Polarisationsrichtungen gebildet ist.

3. Flüssigkristallzelle nach Anspruch 1,
**dadurch gekennzeichnet, dass**
die Hintergrundbeleuchtung (2) durch nebeneinander angeordnete, lichtemittierende Streifen des Polymers (13, 15; 13a, 15a; 13b, 15b; 13c, 15c; 13d, 15d) gebildet sind, wobei die Polarisation der Streifen abwechselnd ausgerichtet ist und die jeweils benachbarten Streifen elektrisch separat ansteuerbar sind.

## Claims

1. Liquid crystal cell (1) comprising a backlighting (2) which is formed by a light-emitting diode and which contains an organic LED material that emits polarized light as a result of electrical excitation, and comprising an analyzer (8),
**characterized in that**
the organic LED material has at least two oriented organic LED materials, in particular polymers (13, 15), which can be driven separately and emit polarized light having intersecting polarization directions.

2. Liquid crystal cell according to Claim 1,
**characterized in that**
the backlighting (2) is formed by at least two polymers (13, 15) which are arranged one above another and have intersecting polarization directions.

3. Liquid crystal cell according to Claim 1,
**characterized in that**
the backlighting (2) is formed by light-emitting strips of the polymer (13, 15; 13a, 15a; 13b, 15b; 13c, 15c; 13d, 15d) which are arranged alongside one another, the polarization of the strips being oriented alternately and the respectively adjacent strips being able to be electrically driven separately.

## Revendications

1. Cellule (1) à cristal liquide comprenant un éclairage (2) d'arrière plan, formé d'une diode électroluminescente et comportant un matériau organique de DEL émettant de la lumière polarisée par excitation électrique, et un analyseur (8),
**caractérisée en ce que** le matériau organique de DEL comprend au moins deux matériaux organiques orientés de DEL, notamment des polymères (13, 15), qui peuvent être commandés séparément et qui émettent de la lumière polarisée ayant des directions de polarisation qui se croisent.

2. Cellule à cristal liquide suivant la revendication 1,
**caractérisé en ce que** l'éclairage (2) d'arrière plan est formé par au moins deux polymères (13, 15) superposés ayant des directions de polarisation qui se croisent.

3. Cellule à cristal liquide suivant la revendication 1,
**caractérisé en ce que** l'éclairage (2) d'arrière plan est formé par des bandes, émettant de la lumière et disposées côte à côte, du polymère (13, 15 ; 13a, 15a ; 13b, 15b ; 13c, 15c ; 13d, 15d), la polarisation des bandes étant orientée de façon alternée et les bandes respectivement voisines pouvant être commandées d'une façon séparée électriquement.
